# EUROPÄISCHE PATENTSCHRIFT

(11) **EP 1 735 192 B1**
(45) Veröffentlichungstag und Bekanntmachung des Hinweises auf die Patenterteilung: **29.01.2014**
(21) Anmeldenummer: 05716202.6
(22) Anmeldetag: 18.03.2005
(51) Int. Cl.: B60R 22/34

(54) **GURTAUFROLLER MIT SCHALTBAREM KRAFTBEGRENZER**
BELT RETRACTOR HAVING A SWITCHABLE FORCE LIMITER
ENROULEUR DE CEINTURE A LIMITEUR DE FORCE COMMUTABLE

(30) Priorität: 10.04.2004 DE 102004017725
(43) Veröffentlichungstag der Anmeldung: 27.12.2006
(73) Patentinhaber: AUTOLIV DEVELOPMENT AB, 447 83 Vargarda (SE)
(72) Erfinder: WIGSTRÖM, Frederik, S-413 04 Göteborg (SE); JANSEN, Nicolaas, S-441 57 Alingsas (SE); DEREVALL, Per, S-441 57 Alingsas (SE)
(86) Internationale Anmeldenummer: PCT/EP2005/002910
(87) Internationale Veröffentlichungsnummer: WO 2005/100106

(56) Entgegenhaltungen:
- DE-A1- 10 117 789
- DE-A1- 10 321 729
- DE-A1- 19 927 427

## Beschreibung

Die Erfindung betrifft einen mit einer Kraftbegrenzung versehenen Gurtaufroller mit einer wenigstens zweistufig ausgebildeten Kraftbegrenzungseinrichtung und mit einer über einen pyrotechnischen Antrieb schaltbaren Schalteinrichtung zur Einstellung eines unterschiedlichen Kraftniveaus für die Kraftbegrenzungseinrichtung, wobei als Schaltvorrichtung ein der Bestimmung des Kraftniveaus dienende Kupplungselemente steuernder und axial in Richtung der Wellenachse zwischen einer Halteposition für die Kupplungselemente und einer Freigabeposition von dem pyrotechnischen Antrieb verschiebbarer Wellenring vorgesehen ist und der Antrieb für den Wellenring als ein in einem stirnseitig an den Wellenring angrenzenden Gehäuse axial verschiebbar angeordneter und an dem Wellenring anliegender Ringkolben ausgebildet ist, der im Auslösefall von dem in das Gehäuse eingeleiteten, von einer pyrotechnischen Ladung erzeugten Gas beaufschlagt und axial verschoben wird.

Ein Gurtaufroller mit den vorgenannten Merkmalen ist in der DE 101 17 789 A1 beschrieben. Der bekannte Gurtaufroller weist einen Torsionsstab und ein Torsiönsrohr als zweistufige Kraftbegrenzungseinrichtung auf, wobei eine formschlüssig mit der Gurtwelle verbundene, aber axial dazu verschiebbare Muffe als Schaltvorrichtung vorgesehen ist, die je nach ihrer Stellung die Gurtwelle entweder mit dem Torsionsstab oder mit dem Torsionsrohr verbindet und dadurch für die Einstellung eines unterschiedlichen Kraftniveaus sorgt. Die Verschiebung der Muffe erfolgt über einen pyrotechnischen Antrieb in Form einer ringförmigen Membran, die gegen die Muffe anliegt und bei Beaufschlagung mit einem Gasdruck für eine Axialverschiebung der Muffe sorgt.

Mit dem bekannten Gurtaufroller ist noch der Nachteil verbunden, daß der auf die Membran als Antriebskolben einwirkende Gasdruck bzw. die entsprechend freigesetzte Gasmenge des pyrotechnischen Antriebes genau dosiert sein müssen, um am Ende des Verschiebeweges der Membran eine Überlastung der Bauteile durch einen noch anstehenden Gasdruck zu vermeiden.

Der Erfindung liegt daher die Aufgabe zugrunde, den vorgenannten Nachteil bei einem gattungsgemäßen Gurtaufroller zu vermeiden.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht im einzelnen einen Gurtaufroller mit den gattungsgemäßen Merkmalen vor, bei welchem der Ringkolben am Ende des axialen Verschiebeweges eine Öffnung zum Abströmen des in das Gehäuse eingeleiteten Gases freigibt. Hiermit ist der Vorteil verbunden, daß eine Überlastung am Ende des Verschiebeweges des Ringkolbens ausgeschlossen ist, weil ein noch anstehender Gasdruck über die freigegebene Abströmöffnung entweichen kann.

Nach einem Ausführungsbeispiel der Erfindung ist vorgesehen, dass der selbst als Ringkolben ausgebildete Wellenring in dem ihn übergreifenden Gehäuse angeordnet und von dem in das Gehäuse eingeleiteten Gas beaufschlagbar ist; mit dieser Ausbildung ist der besondere Vorteil verbunden, dass die Anzahl der erforderlichen Bauteile reduziert ist, weil lediglich noch der als Wellenring ausgebildete Ringkolben in dem zugeordneten Gehäuse untergebracht sein muss.

Es kann vorgesehen sein, dass der Ringkolben gegen die ihn übergreifende Gehäusewanduhg abgedichtet ist.

Nach einem Ausführungsbeispiel der Erfindung ist vorgesehen, dass an der Gurtwelle ein Anschlag für den Wellenring als Begrenzung von dessen Verschiebeweg ausgebildet ist.

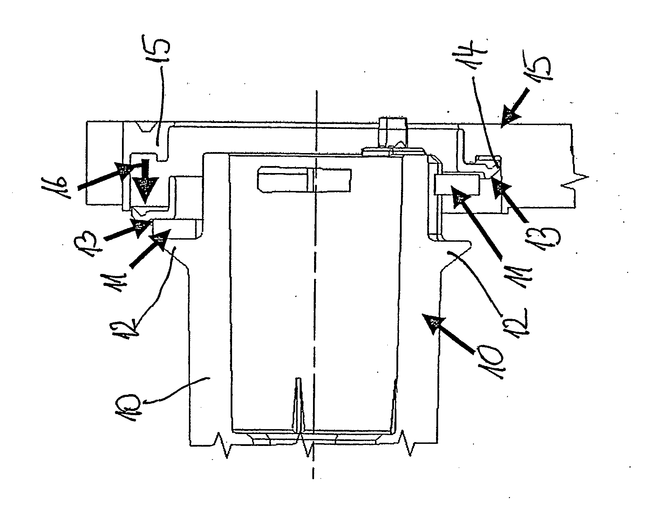

In der Zeichnung ist ein Ausführungsbeispiel der Erfindung wiedergegeben, welches nachstehend beschrieben ist. Die einzige Figur zeigt das Ende einer Gurtwelle mit darauf verschiebbar angeordnetem Wellenring und dem zugeordneten Antrieb dafür in zwei schematischen Ansichten, wobei unterhalb der Wellenlängsachse der Ausgangszustand vor Verschiebung des Wellenringes und oberhalb der Wellenlängsachse der Schaltzustand nach Verschiebung des Wellenringes dargestellt ist.

Auf dem Endbereich einer Gurtwelle 10 ist ein Wellenring 11 axial verschiebbar bis zur Anlage an einem an der Gurtwelle 10 ausgebildeten radialen Anschlag 12 angeordnet. Aufgabe und Funktion des Wellenringes im Zusammenhang mit der an dem Gurtaufroller ausgebildeten Kraftbegrenzungseinrichtung und deren Schaltung sind in der gattungsbildenden DE 199 27 427 C2 ausführlich beschrieben, so dass auf die Beschreibung in dieser Druckschrift Bezug genommen und diese Beschreibung auch zum Gegenstand der vorliegenden Patentanmeldung gemacht wird.

Dem Wellenring 11 benachbart und in dem Ausgangszustand axial daran anliegend ist ein Ringkolben 13 in einem Gehäuse 15 angeordnet, der mittels einer umlaufenden Dichtung 14 gegen die Innenwandung des Gehäuses 15 abgedichtet ist.

Wird in das Gehäuse 15 das von einer nicht dargestellten pyrotechnischen Treibladung freigesetzte Gas eingeleitet, so führt die Expansion des Gases in dem Gehäuse 15 dazu, dass der Ringkolben 13 in Richtung des Pfeils 16 axial verschoben wird und sich dabei auf das Ende der Gurtwelle 10 aufschiebt, wozu der Ringkolben 13 kreisringförmig ausgebildet ist. Bei seiner axialen Verschiebung nimmt der Ringkolben 13 den an ihm anliegenden Wellenring 11 mit und verschiebt den Wellenring 11 bis zur Anlage am Anschlag 12; in dieser Schaltstellung gibt der Wellenring 11 die Kupplungsklinken frei, wodurch die Schaltung auf ein niedriges Kraftbegrenzungsniveau bewirkt ist.

Wie nicht weiter dargestellt, kann der Wellenring 11 selbst als Ringkolben ausgebildet und in dem Gehäuse 15 angeordnet sein, wozu der Wellenring 11 dann eine außen umlaufende Dichtung 14 erhält, so dass das in das Gehäuse 15 eingeleitete Gas den Wellenring 11 unmittelbar beaufschlagt.

## Patentansprüche

1. Mit einer Kraftbegrenzung versehener Gurtaufroller mit einer wenigstens zweistufig ausgebildeten Kraftbegrenzungseinrichtung und mit einer über einen pyrotechnischen Antrieb schaltbaren Schalteinrichtung zur Einstellung eines unterschiedlichen Kraftniveaus für die Kraftbegrenzungseinrichtung, wobei als Schaltvorrichtung ein der Bestimmung des Kraftniveaus dienende Kupplungselemente steuernder und axial in Richtung der Wellenachse zwischen einer Halteposition für die Kupplungselemente und einer Freigabeposition von dem pyrotechnischen Antrieb verschiebbarer Wellenring (11) vorgesehen ist und der Antrieb für den Wellenring (11) als ein in einem stirnseitig an den Wellenring (11) angrenzenden Gehäuse (15) axial verschiebbar angeordneter und an dem Wellenring (11) anliegender Ringkolben (13) ausgebildet ist, der im Auslösefall von dem in das Gehäuse (15) eingeleiteten, von einer pyrotechnischen Ladung erzeugten Gas beaufschlagt und axial verschoben wird, **dadurch gekennzeichnet, daß** der Ringkolben (11, 13)am Ende des axialen Verschiebeweges eine Öffnung zum Abströmen des in das Gehäuse (15) eingeleiteten Gases freigibt.

2. Gurtaufroller nach Anspruch 1, **dadurch gekennzeichnet, dass** der selbst als Ringkolben ausgebildete Wellenring (11) in dem ihn übergreifenden Gehäuse (15) angeordnet und von dem in das Gehäuse (15) eingeleiteten Gas beaufschlagbar ist.

3. Gurtaufroller nach Anspruch 1 oder 2, **dadurch gekennzeichnet, dass** der Ringkolben (11, 13) gegen die ihn übergreifende Gehäusewandung abgedichtet ist.

4. Gurtaufroller nach einem der Ansprüche 1 bis 3, **dadurch gekennzeichnet, dass** an der Gurtwelle (10) ein Anschlag (12) für den Wellenring (11) als Begrenzung von dessen Verschiebeweg ausgebildet ist.

## Claims

1. A belt winder provided with a force limitation, with a force limiting device constructed in at least two stages and with a switching device that can be switched by a pyrotechnical drive for adjusting a different force level for the force limiting device, whereby a shaft ring (11) that controls coupling elements serving to determine the force level and that can shift axially in the direction of the shaft axis between a holding position for the coupling elements and a position of release from the pyrotechnical drive is provided as switching device, and the drive for the shaft ring (11) is constructed as an annular piston (13) that is arranged so that it can shift axially in a housing (15) adjacent on the front side to the shaft ring (11) and which piston rests on the shaft ring (11) and is loaded and shifted axially in the case of a release by the gas introduced into the housing (15) and produced by a pyrotechnical charge, **characterized in that** the annular piston (11, 13) frees an opening for the flowing off of the gas introduced into the housing (15) at the end of the axial shifting path.

2. The belt winder according to claim 1, **characterized in that** the shaft ring (11) constructed itself as an annular piston is arranged in the housing (15) extending over it and can be loaded by the gas introduced into the housing (15).

3. The belt winder according to claim 1 or 2, **characterized in that** the annular piston (11, 13) is sealed against the housing wall extending over it.

4. The belt winder according to one of claims 1 to 3, **characterized in that** a stop (12) for the shaft ring (11) as a limitation of its shifting path is constructed on the belt shaft (10).

## Revendications

1. Enrouleur de ceinture doté d'une limitation de force comprenant un dispositif de limitation de force réalisé au moins à deux niveaux et comprenant un dispositif de commutation pouvant être commuté via un entraînement pyrotechnique pour le réglage d'un niveau de force différent pour le dispositif de limitation de force, dans lequel est prévue en tant que dispositif de commutation une bague d'arbre (11) commandant des éléments d'accouplement servant à déterminer le niveau de force et pouvant être déplacée axialement par l'entraînement pyrotechnique dans la direction de l'axe de l'arbre entre une position de retenue pour les éléments d'accouplement et une position de libération et l'entraînement pour la bague d'arbre (11) est réalisé en tant que piston annulaire (13) adjacent à la bague d'arbre (11) et disposé mobile axialement dans un boîtier (15) contigu côté avant à la bague d'arbre (11), lequel piston annulaire est soumis en cas de déclenchement à l'action du gaz introduit dans le boîtier (15), généré par une charge pyrotechnique et est déplacé axialement, **caractérisé en ce que** le piston annulaire (11, 13) libère à l'extrémité de la course de déplacement axiale une ouverture pour l'échappement du gaz introduit dans le boîtier (15).

2. Enrouleur de ceinture selon la revendication 1, **caractérisé en ce que** la bague d'arbre (11) réalisée elle-même en tant que piston annulaire est disposée dans le boîtier (15) la chevauchant et peut être soumise à l'action du gaz introduit dans le boîtier (15).

3. Enrouleur de ceinture selon la revendication 1 ou 2, **caractérisé en ce que** le piston annulaire (11, 13) est rendu étanche par rapport à la paroi de boîtier le chevauchant.

4. Enrouleur de ceinture selon l'une des revendications 1 à 3, **caractérisé en ce qu**'une butée (12) pour la bague d'arbre (11) est réalisée sur l'arbre de la ceinture (10) en tant que limitation de sa course de déplacement.
